# EUROPEAN PATENT APPLICATION

(11) **EP 0 758 087 A2**
(43) Date of publication of application: **12.02.1997**
(21) Application number: 95115796.5
(22) Date of filing: 06.10.1995
(51) Int. Cl.: G01P 15/08, G01P 1/00

(54) **Acceleration detecting apparatus capable of eliminating unwanted drift component from acceleration sensor signal**

(30) Priority: 31.07.1995 JP 215265/95
(71) Applicant: MURATA MANUFACTURING CO., LTD., Nagaokakyo-shi Kyoto-fu 226 (JP)
(72) Inventor: Nakamura, Takeshi, c/o Murata Manuf. Co., Ltd., Nagaokakyo-shi, Kyoto-fu (JP)
(74) Representative: Schoppe, Fritz, Dipl.-Ing.

(57) **Abstract**

In an acceleration detecting apparatus, an acceleration sensor signal normally contains not only a necessary signal component (i.e., acceleration information), but also an unnecessary signal component (e.g., drift component and gravity acceleration component). This unnecessary signal component can be simply removed from the acceleration sensor signal to obtain only the necessary acceleration signal component for acquisition of correct acceleration information. An acceleration detecting apparatus includes an acceleration sensor for sensing acceleration of an automobile along a drive direction of the automobile to output an acceleration sensor signal, and a removing unit for using the acceleration sensor signal obtained when an engine revolution speed of the automobile is constant as a correction signal and for removing the correction signal from another acceleration sensor signal acquired subsequent to the first-mentioned acceleration sensor signal.

## Description

### BACKGROUND OF THE INVENTION

### Field of the Invention

The present invention generally relates to an acceleration detecting apparatus. More specifically, the present invention is directed to an acceleration detecting apparatus equipped with an accelerator sensor capable of acquiring an acceleration output signal corresponding to acceleration of an automobile along a drive direction thereof. This acceleration detecting apparatus is used to detect a drive speed and a travel distance of an automobile in, for instance, a navigation system of the automobile.

### Description of the Related Art

A navigation system for an automobile, such an apparatus has been marketed that a position of the automobile is indicated on a map by way of a cursor, and this cursor is moved while the automobile is traveled. In this navigation apparatus, both of a drive speed or a drive (travel) distance, and a rotation angle of this automobile should be detected. To detect a rotation angle of an automobile, for instance, an angular velocity detecting apparatus is normally utilized. On the other hand, an acceleration detecting apparatus is normally employed so as to detect either a drive speed of an automobile, or a drive distance thereof.

The conventional acceleration detecting apparatus includes the acceleration sensor in order to obtain the output signal corresponding to the acceleration of the automobile along the drive direction. This acceleration sensor is mounted in such a manner that the acceleration detecting direction by the acceleration sensor is directed to the travel direction of the automobile. Under such conditions, when the automobile is driven, force is applied to the acceleration sensor along the acceleration detecting direction, so that the sensor output signal corresponding to this applied force is obtained. As a consequence, when this sensor output signal is measured, the acceleration of the automobile along the travel direction can be detected. Then, this sensor output signal corresponding to the measured acceleration is integrated by the integrating circuit, so that the drive speed of the automobile can be detected. Then, this integrated sensor output signal is further integrated by another integrating circuit, so that the travel distance of the automobile can be detected.

However, there are some possibilities in the conventional acceleration detecting apparatus that the drift components are involved in the acceleration sensor signal, and these drift components are produced irrelevant to the acceleration of the automobile along the drive direction because of the environmental variations, e.g., temperature changes. Furthermore, when the automobile equipped with the conventional acceleration detecting apparatus is inclined on a slope and the like, gravity acceleration is applied to this acceleration sensor. Then, there are further cases that the gravity acceleration components are involved in the acceleration sensor signal, and these gravity acceleration components are produced irrelevant to the acceleration of the automobile along the drive direction. If such unnecessary signal components as the drift components and the gravity acceleration components produced irrelevant to the acceleration of the automobile along the travel direction are contained in the acceleration sensor output signal, then the correct acceleration of the automobile along the drive direction can no longer be detected. Moreover, neither the drive speed of the automobile, nor the drive distance thereof can be correctly detected.

### SUMMARY OF THE INVENTION

The present invention has been made to solve the above-described problems, and therefore, has a major object to provide an acceleration detecting apparatus and a method of detecting an acceleration capable of removing the unnecessary signal components from an output signal of an acceleration sensor.

This object is achieved by an acceleration detecting apparatus in accordance with claim 1 and a method of detecting a acceleration in accordance with claim 4.

In an acceleration detecting apparatus according to the present invention including an acceleration sensor for producing an output acceleration sensor signal corresponding to acceleration of an automobile along a drive direction, there is provided removing means for using said acceleration sensor signal obtained when an engine revolution speed of the automobile is constant as a correction signal, and for removing said correction signal from another acceleration sensor signal acquired subsequent to said first-mentioned acceleration sensor signal.

A method of detecting an acceleration according to the present invention comprises the steps of sensing the acceleration of an automobile along a drive direction of the automobile to acquire an acceleration sensor signal; determining whether an engine revolution speed of said automobile is constant; deriving a correction signal from the value of said acceleration sensor signal when said engine revolution speed is determined to be constant; and removing said correction signal from the actual value of said acceleration sensor signal acquired subsequent to said first-mentioned value of said acceleration sensor signal to provide a corrected acceleration signal.

In accordance with an acceleration detecting apparatus according to another aspect of the present invention, an acceleration sensor signal obtained when a frequency of a pulsating current generated on a power supply line of the automobile by a generator employed in the automobile becomes constant may be utilized as said correction signal.

In accordance with an acceleration detecting apparatus according to a further aspect of the present invention, an acceleration sensor signal obtained when an ignition period of an ignition plug employed in the engine of said automobile becomes constant may be utilized as said correction signal.

When an engine revolution speed of an automobile is constant, either the automobile is stopped (especially, idling operation), or the automobile is driven under constant speed, in which acceleration of this automobile along the drive direction is equal to 0 (zero). As a consequence, at this time, the output signal from the acceleration sensor, namely the correction signal contains no necessary signal component corresponding to the acceleration of the automobile along the drive direction, namely is constructed of only the unnecessary signal components such as the drift components and the gravity acceleration components, produced irrelevant to this acceleration of the automobile along the travel direction. Another output signal derived from the acceleration sensor obtained subsequent to the above-described sensor output signal acquired during zero acceleration contains not only the unnecessary signal components, but also the necessary signal component corresponding to the acceleration of the automobile along the travel direction. Then, the correction signal is removed from the latter-mentioned sensor output signal, so that the unnecessary signal components (e.g., drift components and gravity acceleration components) are removed from the output signal of the acceleration sensor, and the necessary signal component corresponding to the acceleration of the automobile along the drive direction can be left in this acceleration sensor output signal.

According to the present invention, such an acceleration detecting apparatus can be accomplished capable of removing the unnecessary signal components from the output signal of the acceleration sensor. Accordingly, when the acceleration detecting apparatus according to the present invention is employed, it is possible to reduce errors produced by the unnecessary signal components while detecting the acceleration of the automobile along the travel direction. Therefore, such errors caused by the unnecessary signal components when the drive speed and the drive distance of the automobile are detected may be reduced by utilizing the acceleration detecting apparatus according to the present invention.

Also, in the case that such an acceleration sensor output signal is employed as the correction signal when the frequency of the pulsating current produced on the power supply line of the automobile and generated by the generator of this automobile is constant, since this frequency of the pulsating current produced on the power supply line may be detected from the cigarette lighter socket of the automobile, the acceleration detecting apparatus according to the present invention can be simply connected to the automobile.

### BRIEF DESCRIPTION OF THE DRAWINGS

The above-described object, other objects, features and advantages of the present invention will be apparent from detailed descriptions of various embodiments according to the present invention to be read in conjunction with the accompanying drawings, in which:
- Fig. 1: is a schematic block diagram for representing an arrangement of an acceleration detecting apparatus according to an embodiment of the present invention;
- Fig. 2: is a flow chart for showing operations of the acceleration detecting apparatus indicated in Fig.1;
- Fig. 3: represents a waveform of a signal obtained from a cigarette lighter socket of an automobile under condition that the engine revolution speed of the automobile is 700 rpm; and
- Fig. 4: denotes a waveform of a signal obtained from the cigarette lighter socket of the automobile under condition that the engine revolution speed thereof is 2,000 rpm.

### DETAILED DESCRIPTION OF PREFERRED EMBODIMENT

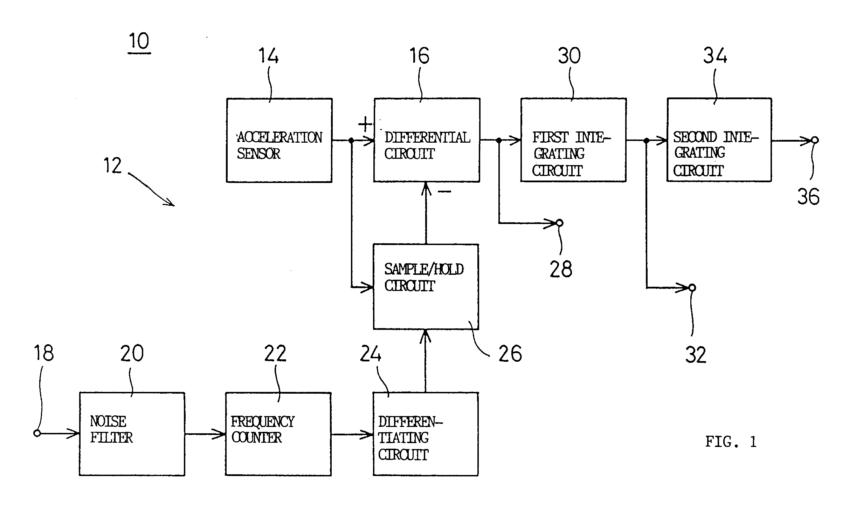

In Fig. 1, there is shown a block diagram of an acceleration detecting apparatus according to a preferred embodiment of the present invention. That is, a detecting apparatus 10 indicated in Fig. 1 includes an acceleration detecting apparatus 12.

The acceleration detecting apparatus 12 includes an acceleration sensor 14. This acceleration sensor 14 senses acceleration of an automobile along a drive (travel) direction of the automobile to obtain a sensor output signal corresponding to this sensed acceleration. The acceleration sensor 14 is mounted on the automobile in such a manner that an acceleration detecting direction is directed to the drive direction of the automobile.

An output terminal of the acceleration sensor 14 is connected to a non-invert input terminal of a differential circuit 16. The differential circuit 16 is to remove a correction signal constructed of only unwanted signal components from the output signal of the acceleration sensor 14 in order to eliminate unwanted signal components such as a drift component and a gravity acceleration component from the sensor output signal of this acceleration sensor 14.

The acceleration detecting apparatus 12 contains an input terminal 18. This input terminal 18 is connected to a power supply line of the automobile, for example, a cigarette lighter socket of the automobile.

The input terminal 18 is connected to an input terminal of a noise filter 20. The noise filter 20 suppresses noise other than a pulsating current generated by power from a generator of the automobile, and appearing on the power supply line of the automobile.

An output terminal of the noise filter 20 is connected to an input terminal of a frequency counter 22. The frequency counter 22 counts the frequency of the pulsating current generated by the power generated from the generator of the automobile on the power supply line. In this frequency counter 22, a voltage signal which is proportional to the frequency of the pulsating current entered into the input terminal of this frequency counter 22 is obtained from the output terminal thereof.

The output terminal of the frequency counter 22 is connected to an input terminal of a differentiating circuit 24. The differentiating circuit 24 differentiates the output signal of the frequency counter 22. As a consequence, when the output signal of the frequency counter 22 becomes a constant voltage, an output signal from the differentiating circuit 24 becomes "0".

The output terminal of the differentiating circuit 24 is connected to one input terminal of a sample/hold circuit 26. Another input terminal of this sample/hold circuit 26 is connected to the above-described output terminal of the accelerator sensor 14. The sample/hold circuit 26 continuously outputs such an output signal of the acceleration sensor 14 as a correction signal when the output signal of the differentiating circuit 24 is equal to 0. It should be noted that when the output signal of the differentiating circuit 24 becomes again 0, the sample/hold circuit 26 detects the output signal of the acceleration sensor 14 at this time as a new correction signal. The output terminal of this sample/hold circuit 26 is connected to the above-described invert input terminal of the differential circuit 16.

The output of the differential circuit 16 is connected to a first output terminal 28 used to output a signal corresponding to the acceleration of the automobile along the travel direction.

Furthermore, the output terminal of this differential circuit 16 is connected to an input terminal of a first integrating circuit 30. The first integrating circuit 30 integrates the output signal derived from the differential circuit 16.

The output terminal of the first integrating circuit 30 is connected to a second output terminal 32 used to output a signal corresponding to the drive (travel) speed of the automobile.

Furthermore, the output terminal of the first integrating circuit 30 is connected to an input terminal of a second integrating circuit 34. The second integrating circuit 34 integrates the output signal derived from the first integrating circuit 30.

The output terminal of the second integrating circuit 34 is connected to a third output terminal 36 used to output a signal corresponding to the travel (drive) distance of the automobile.

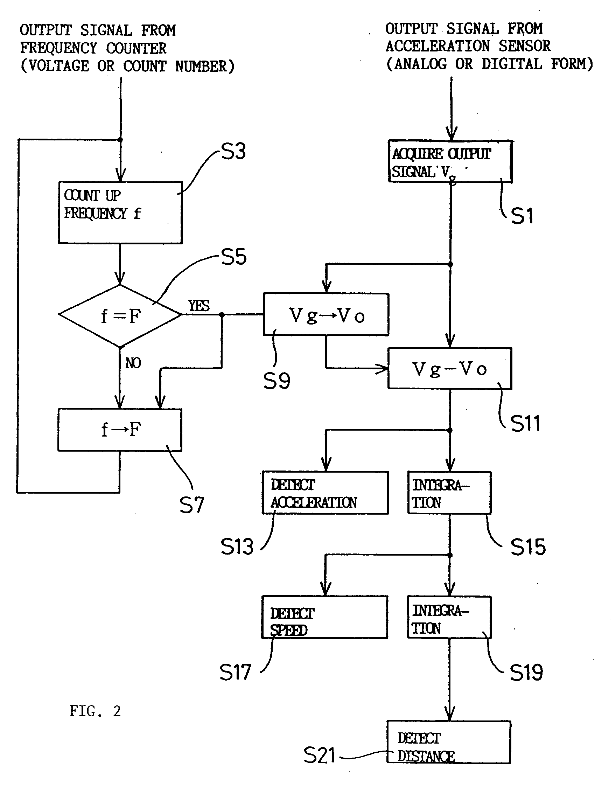

Referring now to a flow chart shown in Fig. 2, operations of this detecting apparatus 10 will be described.

At a step S1 of this flow chart, acceleration of the automobile along the travel direction thereof is detected by the acceleration sensor 14 of the acceleration detecting apparatus 12, and then an output signal "Vg" is obtained from the output terminal of the acceleration sensor 14. In this case, the output signal Vg from the acceleration sensor 14 normally contains the necessary signal component corresponding to the acceleration of the automobile along the travel direction. However, there are some possibilities that this output signal Vg may contain not only the above-described necessary signal component, but also unnecessary signal components such as a drift component and a gravity acceleration component.

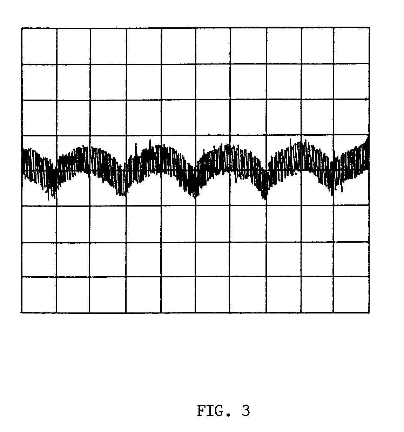

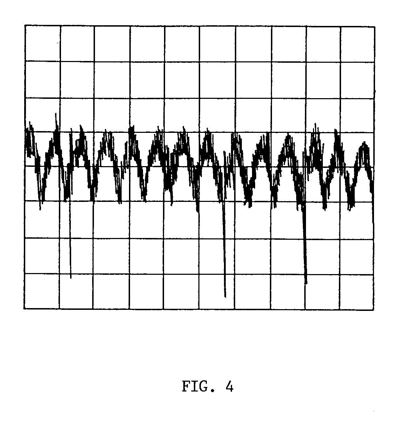

Then, at steps S3, S5 and S7, a judgment is made as to whether or not a frequency "f" of a pulsating current produced in the power supply line of the automobile in connection with the engine revolution speed of the automobile is coincident with another frequency "F" of the pulsating current acquired just before the first-mentioned frequency "f". In other words, a check is done as to whether or not the engine revolution speed of the automobile is constant. In this case, the noise filter 20 suppresses noise other than the pulsating current generated by the power of the generator employed in the automobile, which appears on the power supply line of this automobile. Then, the frequency counter 22 of the acceleration detecting apparatus 12 counts the frequency of this pulsating current, and the counting output signal of the frequency counter 22 is differentiated by the differentiating circuit 24. Fig. 3 and Fig. 4 represent waveform of signals obtained from the cigarette lighter socket of the automobile when the engine revolution speeds of the automobile are 700 rpm and 2,000 rpm, respectively. When the engine revolution speed of the automobile is constant, the output signal of the frequency counter 22 becomes a constant voltage and also the output signal from the differentiating circuit 24 become 0.

When the frequency "f" of this pulsating current is coincident with the frequency "F" of the pulsating current acquired immediately before, namely when the engine revolution speed of the automobile is constant, the output signal "Vg" of the acceleration sensor 14 at this time is set as a correction signal "Vo". Under this condition, the output signal of the differentiating circuit 24 is 0, and at this time, the output signal Vg of the acceleration sensor 14 is continuously outputted as the correction signal Vo from the sample/hold circuit 26. This correction signal Vo is constructed of only such unnecessary components as the drift component and the gravity acceleration component, but no necessary component corresponding to the acceleration of the automobile along the travel (drive) direction.

It should be noted that when the engine revolution speed of the automobile is changed and again becomes constant, the output signal Vg of the acceleration sensor 14 at this time is subsequently continued to be outputted as a new correction signal Vo from the sample/hold circuit 26 at steps S3, S5, S7 and S9.

At step S11, the correction signal Vo is removed from the output signal Vg of the acceleration sensor 14. In this case, the correction signal Vo of the sample/hold circuit 26 is removed from the output signal Vg of the acceleration sensor 14. Therefore, an output signal (Vg-Vo) of the differential circuit 16 corresponds to such a signal that the unnecessary components such as the drift component and the gravity acceleration component are removed from the output signal of the acceleration sensor 14, and further the necessary component corresponding to the acceleration of the automobile along the travel direction is left. Accordingly, a signal corresponding to the acceleration of the automobile in the travel direction is detected from the first output terminal 28 at a step S13.

At a step S15, the output signal of the differential circuit 16 is integrated by the first integrating circuit 30. Therefore, at a step S17, a signal corresponding to the drive speed of the automobile is detected from the second output terminal 32.

At a step S19, the output signal of the first integrating circuit 30 is integrated by the second integrating circuit 34. As a consequence, a signal corresponding to the travel distance of the automobile is detected from the third detection terminal 36 at a step 21.

As previously explained, in this detecting apparatus 10, the unnecessary components are eliminated from the output signal of the acceleration sensor 14. Therefore, when the acceleration, drive speed and drive distance of the automobile along the travel direction are detected by employing this detecting apparatus 10, such an error caused by the unnecessary components can be reduced.

Also, the input terminal 18 of this detecting apparatus 10 is merely connected to the cigarette lighter socket of the automobile, so that this detecting apparatus 10 can be simply connected to the automobile.

In accordance with the above-described embodiment of the present invention, the output signal of the acceleration sensor is employed as the correction signal when the frequency of the pulsating current produced from the power generated from the generator of the automobile and appearing on the power supply line of the automobile becomes constant. Alternatively, for instance, such an output signal of the acceleration sensor when the ignition period of the ignition plug used in the automobile engine is constant may be employed as the correction signal. That is, according to the present invention, the output signal of the acceleration sensor when the engine revolution speed of the automobile is constant may be utilized as the correction signal.

Also, according to the above-described embodiment of the present invention, the differentiating circuit 24 has been employed so as to check whether or not the output signal from the frequency counter 22 is a constant voltage. Instead of this differentiating circuit 24, a comparator may alternatively be employed in order to compare the output signal of the frequency counter 22 and another output signal thereof outputted just before the first-mentioned output signal.

Furthermore, the sample/hold 26 circuit has been used to set the correction signal in the above-explained embodiment of the present invention. Alternatively, this correction signal may be set by employing other proper circuits in accordance with the present invention.

It should also be noted that the detecting apparatus for detecting the acceleration, drive speed, and drive distance of the automobile may be arranged by combining the count signal outputted from the frequency counter and the sensor signal of the acceleration sensor derived by A/D-converting with the program software of the algorithm (shown in Fig. 2) executed by the CPU in conjunction with the memory calculation process operation, i.e., instead of the differentiating circuit, sample/hold circuit, differential circuit, and first /second integrating circuits.

## Claims

1. An acceleration detecting apparatus (12) comprising:
an acceleration sensor (14) for sensing the acceleration (S1) of an automobile along a drive direction of the automobile to output an acceleration sensor signal (V_{g}); and
removing means (16,20,22,24,26) for deriving a correction signal (Vₒ) from the value of said acceleration sensor signal (V_{g}) when an engine revolution speed of an engine of the automobile is constant (S5,S9) and for removing (S11) said correction signal (Vₒ) from the actual value of said acceleration sensor signal (V_{g}) acquired (S1) subsequent to said first-mentioned value of said acceleration sensor signal (V_{g}) to provide a corrected acceleration signal.

2. An acceleration detecting apparatus (12) as claimed in claim 1 wherein said correction signal (Vₒ) is derived from the value of said acceleration sensor signal (V_{g}) when a frequency (f) of a pulsating current generated on a power supply line of the automobile by a generator employed in the automobile becomes constant (S5).

3. An acceleration detecting apparatus (12) as claimed in claim 1 wherein said correction signal (Vₒ) is derived from the value of said acceleration sensor signal (V_{g}) when the ignition period of an ignition plug employed in the engine of said automobile becomes constant (S5).

4. A method of detecting an acceleration comprising:
sensing (S1) the acceleration of an automobile along a drive direction of the automobile to acquire (S1) an acceleration sensor signal (V_{g});
determining (S5) whether an engine revolution speed of said automobile is constant;
deriving (S9) a correction signal (Vₒ) from the value of said acceleration sensor signal (V_{g}) when said engine revolution speed is determined to be constant; and
removing (S11) said correction signal (Vₒ) from the actual value of said acceleration sensor signal (V_{g}) acquired (S1) subsequent to said first-mentioned value of said acceleration sensor signal (V_{g}) to provide a corrected acceleration signal.

5. A method of detecting an acceleration as claimed in claim 4, wherein the step of determining (S5) further comprises the step of detecting (S3) a frequency (f) of a pulsating current generated on a power supply line of said automobile by a generator employed in said automobile and the step of comparing (S5) said frequency (f) with the actual frequncy of said pulsating current measured subsequently to said first-mentioned frequency (f).

6. A method of detecting an acceleration as claimed in claim 4, wherein the step of determining (S5) further comprises the step of detecting (S3) the ignition period of an ignition plug employed in said engine of said automobile and the step of comparing (S5) said period with the ignition period measured subsequently to said first-mentioned period.
